(19)

Europäisches Patentamt
European Patent Office
Office européen des brevets

(11) **EP 2 228 912 A1**

(12) **EUROPEAN PATENT APPLICATION**

(43) Date of publication:
**15.09.2010 Bulletin 2010/37**

(51) Int Cl.:
***H04B 1/69*** *(2006.01)*

(21) Application number: **10155984.7**

(22) Date of filing: **09.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS** | (72) Inventors:<br>• **Neirynck, Dries**<br>  **5611 KG Eindhoven (NL)**<br>• **Rousseaux, Olivier**<br>  **1210 Sint-Joost-ten-Node (BE)** |
| (30) Priority: **09.03.2009 US 158558 P** | (74) Representative: **Sarlet, Steven Renaat Irène et al**<br>**Gevers & Vander Haeghen SA**<br>**Holidaystraat 5**<br>**1831 Diegem (BE)** |
| (71) Applicant: **Stichting IMEC Nederland**<br>**5656 AE Eindhoven (NL)** | |

(54) **A system and a method for wireless transmission and reception of concatenated impulse radio ultra-wideband data bursts**

(57)    The present invention relates a wireless communications system, in particular to a method for transmitting and receiving concatenated data bursts in a wireless communications system. The invention is particularly useful in the field of impulse-based ultra-wideband systems. In an aspect of the invention, a transmitting device is presented for generating and transmitting concatenated bursts or string. In another aspect of the invention, a receiving device is presented for receiving the string. The receiving device further uses frequency domain equalization approach to mitigate inter-symbol interference within the string.

**Fig. 4**

**Description**

<u>**Field**</u>

The present invention relates to wireless communications, in particular to a method for transmitting and receiving concatenated data bursts in a wireless communications system. The invention is particularly useful in the field of impulse-based ultra-wideband systems that are operated under severe power consumption constraints.

<u>**Background art**</u>

Impulse Radio Ultra-wideband (IR-UWB) communication systems communicate information in the form of short pulses (2ns or less) separated by comparatively long silence periods. Such IR-UWB systems typically operate at frequencies between 3 and 10 GHz and occupy a bandwidth of at least 500 MHz. IR-UWB systems typically operate at a fixed pulse repetition frequency (PRF, the average rate at which pulses are being transmitted during one transmission event) and have to limit the amplitude of the transmitted UWB pulses in order to comply with spectral regulations. In real-life conditions, the attenuation of the transmission channel combined with the limited amplitude of the transmitted pulses can make the transmission of a bit of information on a single UWB pulse impossible, as the reception SNR is too low for reliable decoding of the information based on a single pulse. Hence, IR-UWB systems typically make use of several UWB pulses to encode one bit of information (see e.g. IEEE 802.15.4a standard).

IR-UWB enables low-power communication by duty-cycling at the transmitter and the receiver. Circuits can be disabled in between the transmission or reception of pulses or bursts of pulses. The time that the circuits are powered on compared to the total duration of the transmission is characterized by the duty cycling ratio.

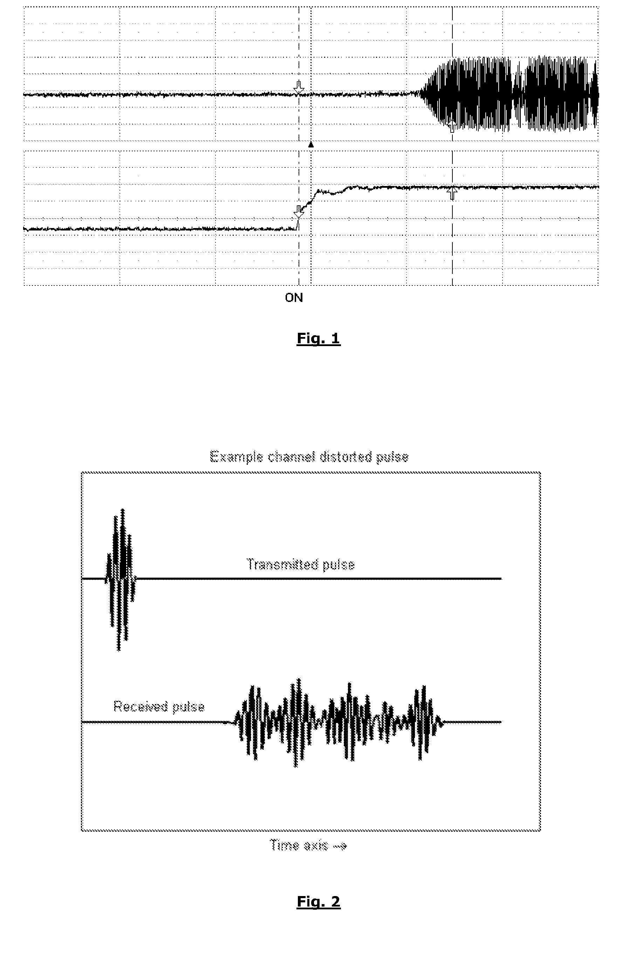

In order to prepare the circuits for transmission or reception, they need to be switched on a short-time before the actual transmission instant or the expected arrival time of the received pulses. The resulting power consumption during start-up is considered an overhead since it does not contribute to the actual transmission or reception. Similarly, power consumption while the circuits are shutting down also leads to an overhead. Both the start-up and shut-down time will degrade the duty cycling ratio, whilst not contributing to the actual transmission (illustrated in Figure 1 for the start-up behavior). Figure 1 shows the delay between the RF oscillator signal (top) and the enable signal (bottom). It can be seen that the oscillator lags behind the enable signal, and that power is being consumed whilst no information is actually being transmitted.

<u>**Disclosure of the invention**</u>

It is an aim of the invention to provide a method and wireless communication system with which higher data throughput can be achieved without substantially increasing the power consumption.

This aim is achieved according to the invention with the method and wireless communication system of the independent claims.

In the present invention a wireless communications system is provided in which multiple bursts of data to be transmitted and to be received are concatenated in strings separated by silent periods, thereby improving the duty cycling efficiency and reducing the power consumption.

In an aspect of the invention, the wireless communications system comprises a transmitting device. The transmitting device is arranged for generating a series of strings of adjacent UWB pulses. Those strings comprise the concatenation of multiple bursts of pulses, each burst representing one bit of information. This corresponds to the presence of several data bits in a single string. Several strings separated by relatively long silence periods are transmitted during one single transmission event. This approach allows maintaining the duty cycle ratio irrespective of the actual data rate. Indeed, when higher data rates are targets, rather than maintaining an isolated burst for every data symbol, separated from other bursts by silent portions, the total length of the string (concatenated bursts) and the interval between strings can be maintained. Higher data throughput while maintaining the duty cycling can thus be achieved according to the invention by encoding several data symbols per string. In the prior art methods in which one data bit per string is maintained, a higher data throughput could only be achieved by reducing jointly the length of a string and the duration of the silence period between two strings.

In an embodiment, the transmitting device is further arranged for encoding the multiple symbols in a string by means of differential burst phase shift keying for encoding.

In an embodiment, the transmitting device is further arranged for encoding the multiple symbols in a string by means of on-off keying.

In another aspect of the invention, the wireless communications system comprises a receiving device. The receiving device is arranged for receiving and demodulating the strings.

In an embodiment, the receiving device further enables a computationally efficient frequency domain equalization approach to efficiently mitigate inter-symbol interference within the string by means of the presence of silent portions present between the pulses.

In an embodiment, the transmitter modifies the position of a string according to a hopping code thereby improving spectral properties of the transmitted signal.

In an embodiment, the transmitter appends strings of symbols, known to both transmitter and receiver, prior to the transmission of the actual data bits for performing channel estimation by the receiver.

In an embodiment, the receiver estimates the transmission channel by means of the string of known bursts.

In an embodiment, the receiver performs refined channel estimation by means of the reference burst in D-BPSK transmission.

In an embodiment, the receiver computes the coefficients of its equalizer by means of channel estimates.

In an embodiment, the receiver computes the coefficients of a rake receiver by means of channel estimates.

## Brief description of the drawings

The invention will be further elucidated by means of the following description and the appended figures.

Figure 1 shows the delay between the RF oscillator signal (top) and the enable signal (bottom).
Figure 2 gives an example of the effect of the radio channel on the pulse shape.
Figure 3 shows examples of different transmission schemes.
Figure 4 shows a possible embodiment of a transmitter according to the present invention.
Figure 5 shows two examples of D-BPSK transmission according to the present invention.
Figure 6 shows two examples of on-off keyed transmission according to the present invention.
Figure 7 shows simulation results comparing performance of DBPSK transmission with a 1-finger rake receiver and a frequency domain equalizer in multipath channels.
Figure 8 illustrates the processing, including cyclic prefix addition and removal, required in OFDM systems.
Figure 9 shows a possible embodiment of a receiver according to the present invention.
Figure 10 shows simulation results comparing performance of OOK transmission with an energy detector, 1-finger rake and frequency domain equalizer in multipath channels.
Figure 11 compares the use of a cyclic prefix as is traditionally done in OFDM in Figure 11(a) with the proposed use of the silent portions surrounding the string in Figure 11(b).
Figure 12 shows a typical packet structure, consisting of a preamble, end-of-preamble, header and payload.

## Detailed description of preferred embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

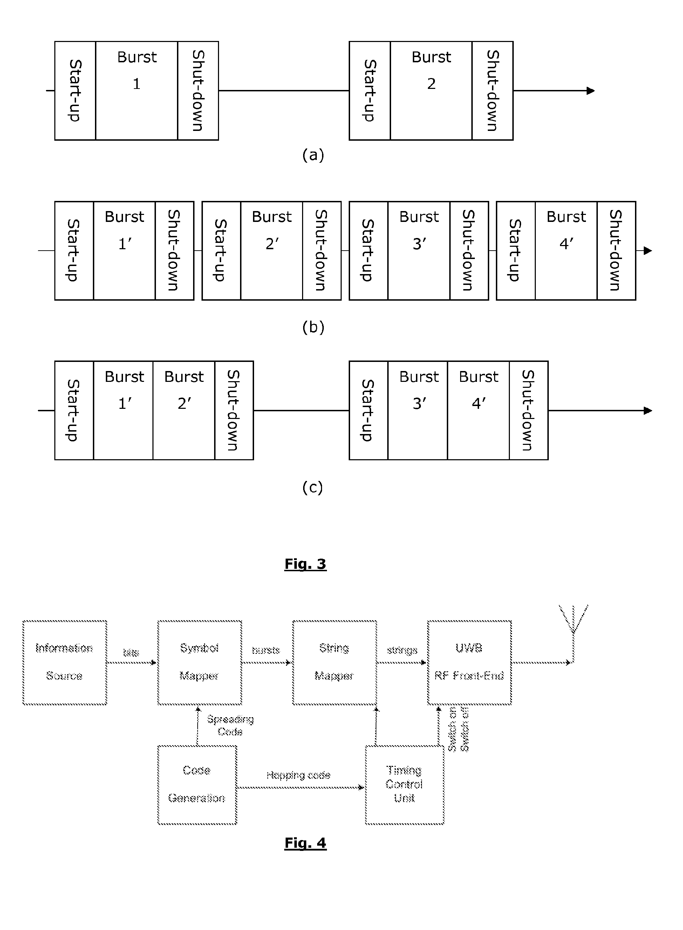

The invention presents a system and a method for wireless transmission and reception of concatenated impulse radio UWB data bursts. The system and the method concatenates multiple bursts of impulse UWB pulses, each burst corresponding to a single data symbol in a continuous string, allowing to maintain the duty cycling of IR-UWB radios irrespective of the actual data rate. Higher data rates are accommodated in a novel way. Rather than maintaining isolated pulses or isolated bursts of pulses for every data symbol, the total length of the string (group of concatenated bursts) and the interval between strings can be maintained. Higher data throughput is thus achieved by encoding more data symbols per string whilst the duration of the strings and the silent times in-between strings can be maintained. The idea is illustrated in Figure 3. Figure 3(b) shows how a higher data rate is achieved in the current state of the art: the bursts become shorter, i.e. contain less pulses, and the silent periods are reduced in length as well. Note that the start-up and shut-down periods are hardware-related and cannot be reduced in length.

Figure 3(c) shows how a higher data rate is achieved according to the present invention. The bursts are reduced in length but also concatenated in strings. Each string is surrounded by a start-up and shut-down period and separated from other strings by a relatively long silent period.

In the rest of the document, the following terminology will be used: a baseband UWB pulse is a pulse of short duration (e.g. a duration less than 2 ns) which has not been modulated at RF frequencies. The term UWB pulse is used to refer to a pulse that has been converted to RF frequencies. A data packet is a series of information bits that will be transmitted during one transmission event. One burst is a series of adjacent UWB pulses or baseband UWB pulses used to map one single bit of information. A string is a long and continuous series of pulses grouping one or more bursts of data.

A *first advantage* of the proposed transmission system is to improve the duty cycling efficiency of both the transmitter and the receiver, therefore reducing the power consumption of the wireless communication device. Indeed, IR-UWB enables low-power communication by duty-cycling at the transmitter and the receiver. Circuits can be disabled in between the transmission or reception of pulses or bursts of pulses. The time that the circuits are powered on compared to the total duration of the transmission is characterized by the duty cycling ratio.

In order to prepare the circuits for transmission or reception, they need to be switched on a short-time before the actual transmission instant or the expected arrival time of the received pulses. The resulting power consumption during start-up is considered an overhead since it does not contribute to the actual transmission or reception. In Figure 1, the bottom figure shows an enable signal. The top figure plots an RF oscillator. It can be seen that the oscillator lags behind the enable signal, and that power is being consumed whilst no information is actually being transmitted. Similarly, power consumption while the circuits are shutting down also leads to an overhead.

In order to reduce the overhead, current systems, such as IEEE 802.15.4a, group the pulses belonging to one symbol in a single burst. In order to support higher data rates, the length of the bursts and the interval between bursts are shortened. However, the overhead, i.e. the time to start-up and shut-down before and after transmission, remains constant. Proportionally, the overhead therefore becomes more important in the overall power budget. Even though the active transmission period may remain the same, the overhead will degrade the duty cycling ratio for higher data rates. In the extreme case, the spacing between pulses may even become so short that duty cycling becomes impossible, resulting in a duty cycling ratio of 1. Grouping the bursts in strings separated by (long) silence periods obviously results in improved duty cycling behaviour and reduced radio power consumption, especially when higher data rates are considered.

A *second advantage* of the proposed transmission scheme resides in improved multi-user access performance when the radio channel is shared by multiple users at the same time. Indeed, when UWB pulses sent by the transmitter are propagated in the environment, they undergo multiple reflections and are hence distorted by the communication channel. The transmission channel is then called a multipath channel, and the received pulses are distorted versions of the transmitted pulses that have a significantly longer duration than the duration of the received pulse (typically several tens of nanosecond at reception against 2 ns or less at the transmitter, see Figure 2 for an illustration of the effect of the radio channel on the pulse shape: the RF transmitted pulse (top) is attenuated and spread out in the time domain by the channel, resulting in the distorted received pulse (bottom).). The delay spread of the channel characterizes the dispersive nature of the channel and is the difference between the duration of a transmitted pulse and of a received pulse. In classical UWB-IR communications, the duration of a received burst is the duration of the transmitted burst plus the channel delay spread. When the duration of a burst is relatively long and the silence portion between the transmitted bursts is relatively long, the channel delay spread has a relatively limited impact on the total duration of the silent portion observed by the receiver between received bursts. When the data rates are increased and the silent portion between transmitted bursts, are reduced, the silent portions between the received burst are significantly reduced. The proportion between silence portions and the presence of UWB bursts that is typically 95% or more at the transmitter can be reduced in dramatic proportions at the receiver; in extreme cases (high data rates and long channel delay spread), the receiver will not be able to observe silent portions between received pulses. When several users are attempting to use the channel at the same moment, one can count on the scarce nature of the transmitted signal to let them transmit in an uncoordinated fashion. Indeed, the probability of collision between the bursts of different users remains acceptable if sufficient randomness is provided for on the moment at which the pulses are transmitted (probability of collision is here to be understood as the chance that a receiver receives at the same moment an UWB burst from one user and from another user). For relatively low data rates, the chance of collision is relatively unimpacted by the delay spread of the channel. However, as the data rate increases and the silent portion in between bursts is reduced, the probability of collision between the bursts of two uncoordinated users will progressively increase to achieve a probability 1 in extreme cases, making uncoordinated transmission of several users problematic. In the proposed transmission scheme, the possibility of uncoordinated multiple access to the channel is preserved thanks to the constant (long) duration of the strings, allowing to maintain the probability of collision between information strings at acceptable levels, even for high data rates and relatively long channel delay spread figures.

In a transmitter, forming a part of a wireless communications system according to the invention, the data which is to be transmitted is generated in a digital signal processor (DSP). The data is then passed to a symbol mapper who maps the data bits into bursts of baseband pulses. Several bursts are then concatenated to form a series of strings separated by silence portions. The baseband pulses are then passed to the RF front-ends that modulate them and generate UWB pulses that are sent over to the transmit antenna. A timing control unit switches on the RF front-end prior to the transmission of each string and switches it off in the silent portions in-between the strings. An example of such a transmitter is given in Figure 4.

Classical UWB-IR communication schemes encode the information on UWB pulses in different manners. Information can be encoded in the phase of the (burst of) pulses, typically Binary Phase Shift Keying (BPSK); information can be encoded in the position of the (burst of) pulses (PPM), or in the presence or absence of (bursts of) pulses (On Off Keying, OOK). Sometimes information is coded in a combination of those schemes (e.g. IEEE 802.15.4a uses a combination of BPSK and PPM).

Encoding the information in the phase of the pulse is an option in the scheme of the invention. However, phase ambiguity is to be avoided if one wants to encode the data in the absolute phase of the pulses. In the proposed setup, the relatively high RF frequencies at stake (up to 10 GHz) combined with the relatively long duration of silent portions between the strings (typically 10 microseconds) may require to maintain very accurate timing references between the pulses at both the transmitter and the receiver if one wants to avoid such phase ambiguities (e.g. a phase drift of 45 degrees corresponds to a timing drift of 0.0125 ns for a 10 GHz RF frequency. Maintaining the timing within such an accuracy over a period of 10 microseconds requires a timing reference with an accuracy of 1.25 ppm). Note that this problem is also encountered in low data rate modes of classical systems as 802.15.4a. Since practical timing reference achieve 20 ppm at best, the ability to operate with less accurate timing references would be a clear advantage.

A way of avoiding the need for such accurate timing references, whilst still encoding information in the phase of the bursts, is to encode the information in the phase difference between the various bursts that form the string. In such a system, a reference burst known to both the transmitter and the receiver is transmitted at the start of each string. This reference burst is used to set the phase reference at the start of the burst. The first bit of information is encoded in the phase difference between the reference burst and the next burst, allowing for operation without a RF-accurate timing reference. By concatenating the bursts and encoding the information in the phase difference between bursts, not only is the overhead of starting up and shutting down reduced, but the frequency accuracy requirements can also be significantly relaxed.

By using differential burst phase shift keying (D-BPSK) modulation in combination with the concatenated bursts, these phase accuracy requirements can be drastically relaxed. Since the information is encoded only in the phase difference between the bursts, the phase needs to be stable only from one burst to the next. Moreover, since the bursts are concatenated to form a continuous string, the interval between bursts have been eliminated, thus further reducing the duration over which phase ambiguity needs to be avoided.

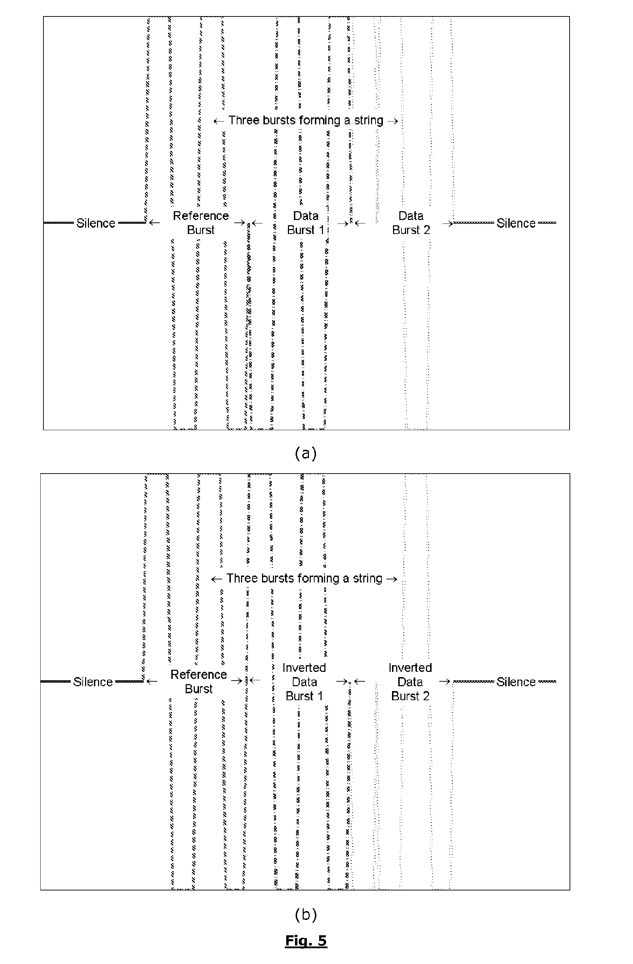

Two examples of this modulation technique are illustrated in Figure 5. In the examples, a string consists of three bursts. The first is a reference burst. The plot in Figure 5(a) shows to the baseband pulse corresponding to the transmission of the bit sequence '00', while the plot in Figure 5(b) shows the same baseband pulse sequence corresponding to the bit sequence '10' assuming inverting the burst phase corresponds to '1'.

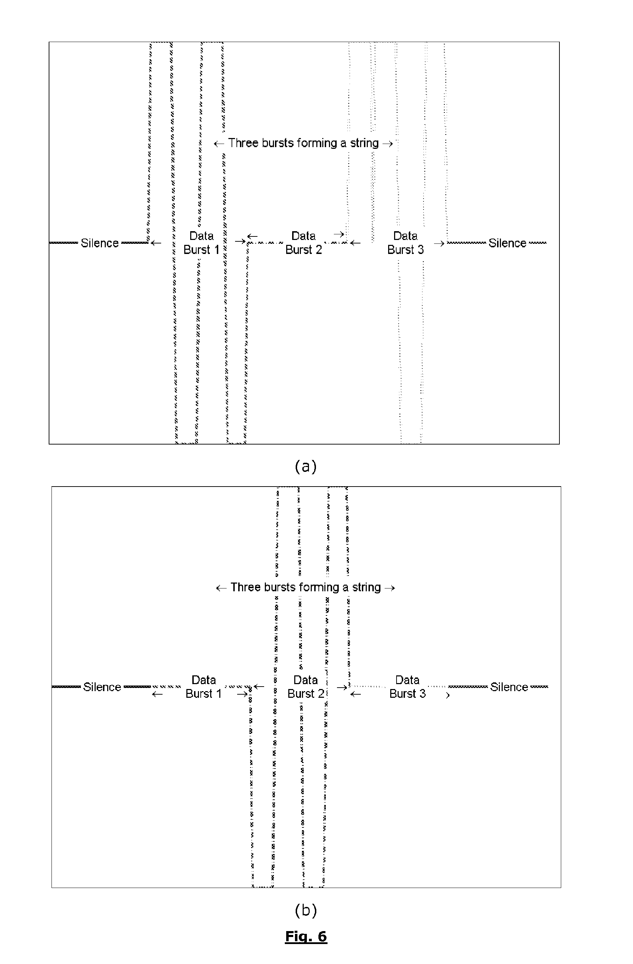

Another way of encoding multiple symbols in a continuous string is to encode the information in the presence or absence of bursts. Using this form of on-off keying, the silence periods within the string can correspond to a logical '1' or '0', depending on the convention. This approach is illustrated by Figure 6. Figure 6 shows two examples of on-off keyed transmission according to the present invention. In the examples, a string consists of three bursts, each corresponding to a data bit. The plot in Figure 6(a) shows the baseband pulses corresponding to '101' and the plot in Figure 6(b) shows the baseband pulses corresponding to '010', assuming '0' are mapped to 'off' and '1' to 'on'.

An obvious advantage of this modulation format is that it doesn't require active transmission during the silent periods. Depending on the duration of the silence periods, it may even be possible to duty-cycle the transmitter. Compared to the above differential burst phase shift keying, on-off keying has the additional advantage that the receiver doesn't need to determine the phase of the incoming bursts. It is therefore possible to receive on-off keying non-coherently.

In order to improve the spectral properties of the transmitted signal, the actual position of the transmitted strings and the duration of the silent portions between them can be picked by a pseudo-random time hopping scheme that maintains the average distance between strings, but adds sufficient randomness to avoid spectral spikes.

In order to allow help the receiver acquiring the timing of the incoming signal, the transmitter may send a synchronization preamble prior to the transmission of the actual payload strings. Such synchronization preamble can be in the form of strings, but can alternatively be in the form of isolated pulses or any other form of signal that allows to acquire the timing prior to the reception of payload symbols.

The advantages that result from the use of the proposed concatenated bursts transmission scheme appear clearly from the above text. Below, it is described how the proposed transmission scheme can be received efficiently.

A problem that needs to be solved in order to usefully receive such strings of concatenated bursts is the inter-symbol interference (ISI) that results from the multipath nature of the UWB communication channels. We have seen above that multipath UWB channels can have significant delay spreads that extend the duration of the received bursts or pulses as compared to the duration of the transmitted pulses or bursts. In order to avoid received bursts to interfere with one another and enable to separately decode individual information bits, classical UWB-IR systems map a single bit of information on a burst and introduce a long enough guard time between the bursts to avoid interference between bursts resulting from the multipath effects at the receiver. In the transmission system of the invention, as bursts are concatenated in a string, the multipath nature of the UWB channel will inevitably cause interference between consecutive bits of information. The higher the data rate, the more acute this problem becomes.

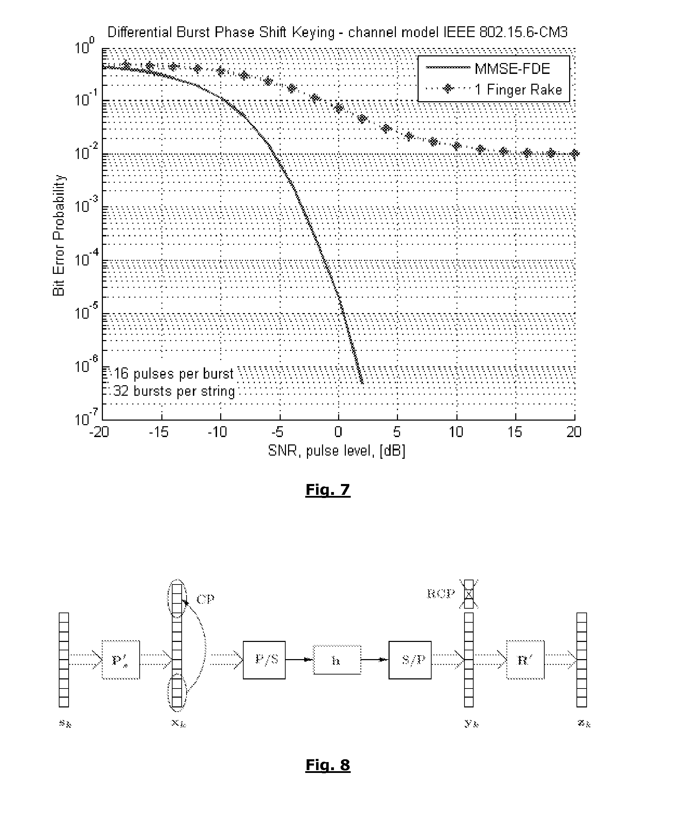

Classical IR-UWB systems make use of rake algorithms to receive successfully the transmitted data when multipath channels are encountered. Such receivers are performing way too poorly in the proposed setup when realistic communication channels are considered, with significant error floors that make the recovery of the transmitted information impossible. This is especially clear for medium and high data rates where as little as few pulses per bit are used. The performance degradation is illustrated in Figure 7 where the performance degradation of a rake receiver under the proposed transmission scheme in the absence of multipath effects in the channel and taking multipath effects into account is shown. Simulation results are shown, comparing performance of D-BPSK transmission with a 1-finger rake receiver and a frequency domain equalizer in multipath channels. Whereas the 1-finger rake suffers from an unacceptable error floor, the frequency domain equalizer according to the present invention (see below) offers much better performance.

However, the way transmitted data are organized in the transmission scheme of the invention allows us to rely on an efficient Frequency-Domain equalization scheme that relate to the equalization schemes used in OFDM and related transmission schemes.

*Classical Frequency-Domain Equalization schemes:*

Transmission designed to enable low-complexity frequency-domain equalization at the receiver usually organize data symbols in blocks. A cyclic prefix whose length is greater than the channel delay spread is appended to each block before transmission; this cyclic prefix is simply the copy of the last symbols of the block. The data symbols of the resulting block are then sent serially over the air. The impact of the channel can be described as the linear convolution of the transmitted symbols with a discrete filter h=[h[0], ... , h[L]]. At the receiver, the block is reconstructed from the serially received data and the cyclic prefix is discarded (see Figure 8).

Thanks to the presence of the cyclic prefix, the effects of the channel on the transmitted data can be expressed at a block-level by means of a circulant channel matrix:

$$
\mathbf{H}_{circ} =
\begin{bmatrix}
h[0] & 0 & \cdots & 0 & h[L] & \cdots & h[1] \\
\vdots & \ddots & & & & \ddots & \vdots \\
h[L] & & \ddots & & & & h[L] \\
0 & \ddots & & \ddots & & & 0 \\
\vdots & & \ddots & & \ddots & & \vdots \\
\vdots & & & \ddots & & \ddots & 0 \\
0 & \cdots & \cdots & 0 & h[L] & \cdots & h[0]
\end{bmatrix}
$$

Such channel matrixes have the remarkable property that they are diagonalized by the use of FFT/IFFT decomposition. The resulting diagonal matrix has the FFT transform of the transmission channel h on its main diagonal. The multipath effects of the channel can thus be completely canceled out making use of simple one-tap frequency-domain equalizers compensating the effects of the channel if appropriate FFT and IFFT operations are provided for. It is well-known that such FFT and IFFT operations can be implemented with a very low computational complexity, much lower than the complexity required to perform comparable equalization operations by means of classical linear equalizers, hence the attractiveness of such equalization schemes that combine high performance in canceling out the effects of the communication channel with the possibility of low-power implementations.

*Proposed reception scheme according to the invention*

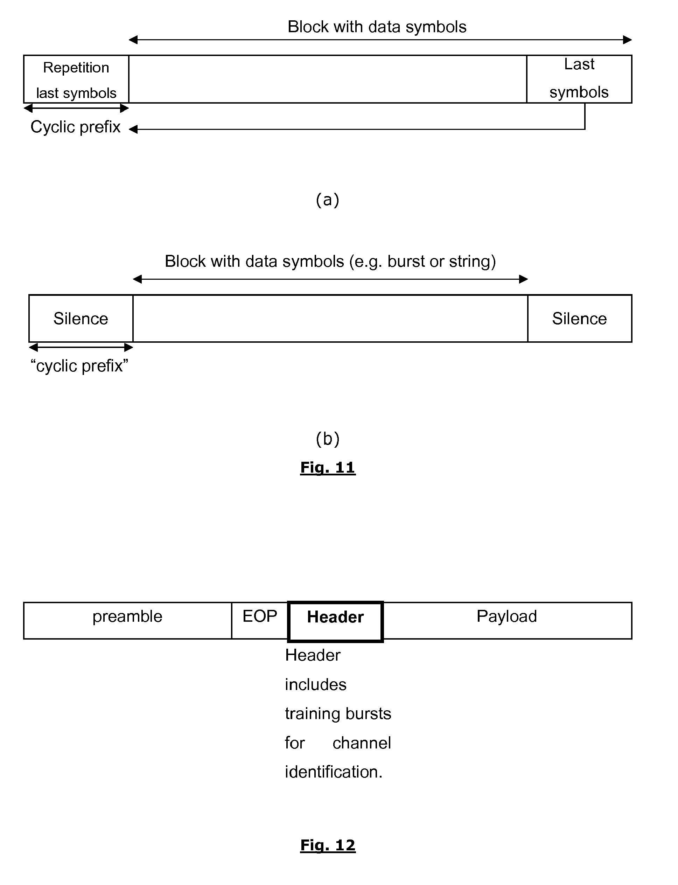

In the proposed transmission scheme, the strings of concatenated bursts are surrounded by silent portions, which are equivalent to the repeated transmission of the symbol zero. The silent portion immediately following the transmission of a string can be regarded as the extension of the transmitted block by a series of zeros. Likewise, the silent portion preceding the transmission of the string can be regarded as a cyclic prefix, being the exact copy of the silent portion that follows the string. This is illustrated in Figure 11.

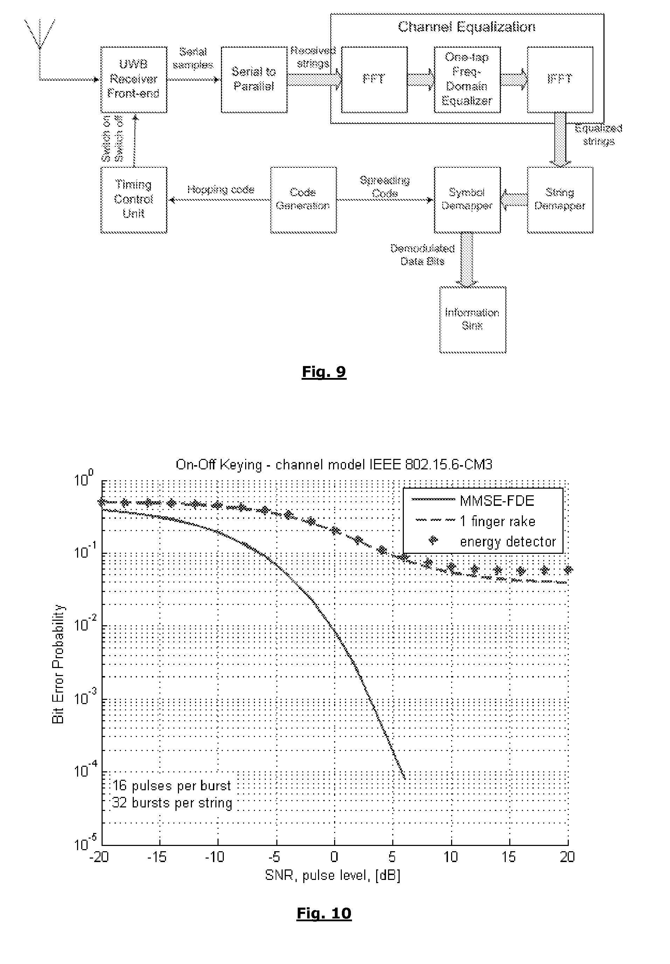

It hence results from the proposed organization of the transmitter that the effects of the transmission channel on the transmitted data can be expressed by means of a circulant channel matrix. Low-complexity/high performance frequency-domain equalization schemes can thus be used at the receiver at no extra cost (i.e. no need to explicitly introduce a wasteful cyclic prefix at the transmitter). An example of a receiver performing such frequency-domain equalization is depicted in Figure 9.

To have an efficient operation of the invention, the duration of the silence should be at least as long as the channel delay spread. Remark that the FDE method does not necessarily have to be used in combination with the continuous string as developed by the present application. The method can be applied to any bursty transmission, as long as the bursts are surrounded by silence periods (or zeros) of sufficient duration.

The performance resulting from the use of such equalizers is depicted in Figure 10. Figure 10 shows simulation results comparing performance of OOK transmission with an energy detector, 1-finger rake and frequency domain equalizer in multipath channels. Whereas both the 1-finger rake and the energy detector suffer from an unacceptable error floor, the frequency domain equalizer according to the present invention offers much better performance. It appears clearly from that figure that unlike what is observed when rake receivers are used, the performance degradation resulting from the multipath effects is limited and reliable communication can still be achieved even at the higher data rates.

Besides the low-complexity frequency-domain equalizers described above, the proposed transmission scheme according to the invention offers the possibility to use higher-performance equalizers that also have a larger computational complexity. Indeed, when the frequency-domain equalizers presented above are used, the complete block of data is reconstructed at the output of the equalizer, *including* the zeros corresponding to the silent period following the string of bursts. However, these bits are known to be zeros in advance. This prior knowledge allows for extra degrees of freedom in the design of the equalizer that can then be designed to improve their performance focusing solely on the non-zero symbols and disregarding the impact of the equalizer coefficients on the known zero symbols.

In an embodiment of a receiver, forming a part of a wireless communications system according to the invention, the received RF UWB signals are processed by an UWB radio front-end that transform the RF waves in digital information. A timing control unit switches on the RF front-end prior to the moment where a string is received, the RF front-end processes the RF UWB signal for the duration of the received string, and is switched off after the received string is ended. The duty cycling of the RF front-end allows saving significant power. In order to enable such duty cycling of the receiver, the timing of the incoming signal needs to be known to the receiver, such that he knows at which moment to expect pulses. A timing acquisition and tracking unit can be used to acquire and maintain knowledge of such timing. Such unit can for instance rely on the synchronization preamble appended by the transmitter prior to payload transmission in order to acquire the incoming signal's timing.

Next, the received burst is passed on to an equalizer in the digital portion of the receiver that needs to recover the transmitted information data from the received string. In an embodiment, the digital receiver can comprise an equalizer that is designed to counter-act the effects of the multipath channel and reconstruct as closely as possible the transmitted string. This equalizer is then followed by a string demapper and a burst demapper that reconstruct the transmitted information bits from the equalized string. In an embodiment, such equalizer can be a frequency-domain equalizer which first performs an FFT on the received string, then performs one-tap frequency-domain equalization and finally performs an IFFT to reconstruct the transmitted string. An example of such a receiver is given in Figure 9.

In order to calculate the equalizer coefficients, knowledge of the channel characteristics is required. In order to aid the receiver to determine the channel characteristics, one or more bursts known in advance to the receiver (a training burst) can be included in the packet structure prior to the transmission of the actual data bursts, as shown in Figure 12. Figure 12 shows a typical packet structure, consisting of a preamble, end-of-preamble, header and payload. The known training bursts to aid channel estimation are included in the header. The distortion of these bursts can then be analyzed by the receiver in order to derive the channel and the equalizer's coefficients.

Moreover, when DBPSK transmission is used, the first symbol which is used as reference for the phase is made of known symbols. This knowledge can be used to further refine the estimation of the transmission channel towards the design of the equalizer.

**Claims**

1. Method for UWB communication, comprising the steps of:

   a) generating a series of strings of adjacent UWB pulses, each string comprising a concatenation of multiple bursts of pulses, each burst representing one bit of information;
   b) choosing suitable modulation for said strings to enable a receiving device receiving said strings to demodulate said strings and retrieve said multiple bursts of pulses therefrom;
   c) feeding said strings to a transmitting device for transmission of said strings in a series of UWB transmission blocks, each block containing one of said strings, said UWB transmission blocks being separated by relatively long silence periods;
   d) duty-cycling said transmitting device for consuming power only upon transmission of each of said UWB transmission blocks.

2. The method of claim 1, wherein information is encoded in a phase difference between the bursts that form the string, and a known reference burst is transmitted at the start of each string.

3. The method of claim 1, wherein information is encoded in the presence or absence of bursts within the strings.

4. The method of any one of the previous claims, wherein an actual position of the transmitted strings and the duration of the silent portions between them is determined by a pseudo-random time hopping scheme that maintains the average distance between strings and adds randomness to avoid spectral spikes.

5. The method of any one of the previous claims, wherein said suitable modulation comprises a cyclic prefix whose length is greater than the channel delay spread.

6. The method of claim 5, wherein the cyclic prefix is a copy of the last symbols of the respective block.

7. The method of claim 5, wherein the silence portions surrounding the string are used as the cyclic prefix.

8. The method of any one of the claims 5-7, further comprising the steps of receiving said UWB transmission blocks by means of a receiving device which uses a Frequency-Domain equalization scheme in demodulating the transmitted blocks.

9. A wireless communications system comprising a transmitting device, the transmitting device comprising a digital signal processor (DSP) for generating data bits, a symbol mapper for mapping the data bits into bursts of baseband pulses, a string mapper for concatenating the bursts to form a series of strings separated by silence portions, an RF front-end for modulating them and generating UWB transmission blocks for a transmit antenna, and a timing control unit for switching on the RF front-end prior to the transmission of each string and switches the RF front-end off in the silent portions in-between the strings.

10. A wireless communications system according to claim 9, wherein the string mapper is provided for encoding information in a phase difference between the bursts that form the string, and placing known reference burst at the start of each string.

11. A wireless communications system according to claim 9, wherein the string mapper is provided for encoding information in the presence or absence of bursts within the strings.

12. A wireless communications system according to any one of the claims 9-11, wherein the string mapper is provided for adding a cyclic prefix whose length is greater than the channel delay spread.

13. A wireless communications system according to any one of the claims 9-12, wherein the string mapper is provided for adding a cyclic prefix which is a copy of the last symbols of the respective block.

14. A wireless communications system according to any one of the claims 9-13, further comprising a receiving device for receiving said UWB transmission blocks, the receiving device being equipped for applying a Frequency-Domain equalization scheme for demodulating the received blocks.

**15.** A wireless communications system according to claim 14, wherein the receiving device is equipped for using the silence portions surrounding the strings as cyclic prefix.

**16.** A wireless communications system according to claim 14 or 15, wherein the receiving device comprises an UWB radio front-end for transforming received RF waves into digital information, and a timing control unit for switching on the RF front-end prior to reception of a string and switching off the RF front-end after the end of the received string.

**17.** A wireless communications system according to any one of the claims 14-16, wherein the receiving device comprises a timing acquisition and tracking unit for acquiring and maintaining timing of incoming signals, relying on a synchronization preamble appended by the transmitter prior to payload transmission.

**18.** A wireless communications system according to any one of the claims 14-17, wherein the receiving device comprises an equalizer followed by a string demapper and a burst demapper to reconstruct the transmitted information bits from the equalized string.

**19.** A wireless communications system according to claim 18, wherein the equalizer is a frequency-domain equalizer which first performs an FFT on the received string, then performs one-tap frequency-domain equalization and finally performs an IFFT to reconstruct the transmitted string.

**Fig. 1**

Example channel distorted pulse

Transmitted pulse

Received pulse

Time axis →

**Fig. 2**

| Start-up | Burst 1 | Shut-down | | Start-up | Burst 2 | Shut-down |

(a)

| Start-up | Burst 1′ | Shut-down | | Start-up | Burst 2′ | Shut-down | | Start-up | Burst 3′ | Shut-down | | Start-up | Burst 4′ | Shut-down |

(b)

| Start-up | Burst 1′ | Burst 2′ | Shut-down | | Start-up | Burst 3′ | Burst 4′ | Shut-down |

(c)

**Fig. 3**

Information Source → bits → Symbol Mapper → bursts → String Mapper → strings → UWB RF Front-End → antenna

Spreading Code

Code Generation → Hopping code → Timing Control Unit

Switch on/off signals

**Fig. 4**

━━━ Silence ━━━← ←━ Reference Burst →← Data Burst 1 →←━ Data Burst 2 →━ Silence ━

← Three bursts forming a string →

(a)

━━━ Silence ━━━← ←━ Reference Burst →← Inverted Data Burst 1 →← Inverted Data Burst 2 →━ Silence ━

← Three bursts forming a string →

(b)

**Fig. 5**

Silence ← Data Burst 1 ← Data Burst 2 → Data Burst 3 → Silence

← Three bursts forming a string →

(a)

Silence ← Data Burst 1 → Data Burst 2 → Data Burst 3 → Silence

← Three bursts forming a string →

(b)

**Fig. 6**

**Fig. 7**

**Fig. 8**

**Fig. 9**

**Fig. 10**

Block with data symbols

| Repetition last symbols | | Last symbols |
|---|---|---|

Cyclic prefix

(a)

Block with data symbols (e.g. burst or string)

| Silence | | Silence |
|---|---|---|

"cyclic prefix"

(b)

**Fig. 11**

| preamble | EOP | **Header** | Payload |
|---|---|---|---|

Header includes training bursts for channel identification.

**Fig. 12**

Europäisches Patentamt

European Patent Office

Office européen des brevets

## EUROPEAN SEARCH REPORT

Application Number

EP 10 15 5984

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/130685 A1 (ROGERSON GERALD D [US] ET AL) 5 June 2008 (2008-06-05) | 1-3,5-19 | INV. H04B1/69 |
| A | * figures 3-11, 13-18 *<br>* paragraph [0112] *<br>* paragraph [0121] *<br>* paragraph [0124] - paragraph [0125] *<br>* paragraph [0132] *<br>* paragraph [0144] - paragraph [0145] *<br>* paragraph [0156] - paragraph [0162] *<br>* paragraph [0182] - paragraph [0205] *<br>* paragraph [0270] *<br>* paragraph [0282] *<br>* paragraph [0288] - paragraph [0294] * | 4 | |
| X | WO 2004/032358 A2 (INTEL CORP [US]) 15 April 2004 (2004-04-15) | 1-4,9-11 | |
| A | * page 7, line 1 - line 4 *<br>* page 8, line 20 - page 9, line 10 *<br>* page 15, line 20 - page 16, line 3 *<br>* figure 5 * | 5-8, 12-19 | |
| X | WO 2006/098392 A1 (MITSUBISHI ELECTRIC CORP [JP]; ORLIK PHILIP [US]; MOLISCH ANDREAS F [U]) 21 September 2006 (2006-09-21) | 1-4,9-11 | TECHNICAL FIELDS SEARCHED (IPC)<br><br>H04B |
| A | * page 6, line 6 - line 21 *<br>* page 15, line 15 - line 24 *<br>* page 25, paragraph 3 - page 26, paragraph 1 *<br>* figure 14 * | 5-8, 12-19 | |
| X | WO 2006/025577 A1 (MATSUSHITA ELECTRIC IND CO LTD [JP]; YAMAMOTO NAOTAKE [JP]) 9 March 2006 (2006-03-09) | 1-3,9-11 | |
| | * page 16, line 7 - page 17, line 4 *<br>* claim 1 *<br>* figures 10-13 * | | |

The present search report has been drawn up for all claims

| Place of search | Date of completion of the search | Examiner |
|---|---|---|
| The Hague | 27 May 2010 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 5984

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2010

| Patent document cited in search report | | Publication date | Patent family member(s) | | Publication date |
|---|---|---|---|---|---|
| US 2008130685 | A1 | 05-06-2008 | NONE | | |
| WO 2004032358 | A2 | 15-04-2004 | AT | 378736 T | 15-11-2007 |
| | | | AU | 2003275272 A1 | 23-04-2004 |
| | | | CN | 1650535 A | 03-08-2005 |
| | | | DE | 60317540 T2 | 23-10-2008 |
| | | | EP | 1547265 A2 | 29-06-2005 |
| | | | HK | 1074703 A1 | 27-06-2008 |
| | | | TW | 253239 B | 11-04-2006 |
| | | | US | 2005020206 A1 | 27-01-2005 |
| WO 2006098392 | A1 | 21-09-2006 | EP | 1859535 A1 | 28-11-2007 |
| | | | JP | 2008533755 T | 21-08-2008 |
| | | | US | 2006203931 A1 | 14-09-2006 |
| WO 2006025577 | A1 | 09-03-2006 | CN | 1918808 A | 21-02-2007 |
| | | | JP | 4365293 B2 | 18-11-2009 |
| | | | JP | 2006074432 A | 16-03-2006 |
| | | | US | 2007147475 A1 | 28-06-2007 |

EPO FORM P0459

For more details about this annex : see Official Journal of the European Patent Office, No. 12/82